# EUROPEAN PATENT SPECIFICATION

(11) **EP 1 645 593 B1**
(45) Date of publication and mention of the grant of the patent: **20.02.2008**
(21) Application number: 05020331.4
(22) Date of filing: 17.09.2005
(51) Int. Cl.: C08K 5/54, C08K 3/04, C08K 3/36

(54) **Crosslinking of carboxylated nitrile polymers with organo functional silanes: a curable plasticizer composition**
Vernetzung von carboxyliertem Nitrilpolymeren mit organofunktionnelen Silanen: eine härtbare Weichmacherzusammensetzung
Réticulation de polymères nitriles carboxylates par des silanes organofonctionnels: une composition de plastifiant durcissable

(30) Priority: 05.10.2004 US 616153 P
(43) Date of publication of application: 12.04.2006
(73) Proprietor: Lanxess Inc., Sarnia, Ontario N7T 7M2 (CA)
(72) Inventor: Nasreddine, Victor, Sarnia; Ontario, N7V 2B8 (CA); Guo, Sharon, Sahnaghai 200001 (CN)
(74) Representative: Wichmann, Birgid

(56) References cited:
- WO-A-01/14470
- US-A- 5 830 941
- US-A1- 2002 132 892
- US-A1- 2003 171 500
- US-A1- 2004 179 757
- BANDYOPADHYAY, S. ET AL.: "Effect of (3-aminopropyl) triethoxysilane on chemorheological behavior of carboxylated nitrile rubber in presence of surface oxidised ISAF carbon black" J. APPL. POLYM. SCI., vol. 63, 1997, pages 1833-1839, XP002352700
- DE, S. K.: "Silica filler as a crosslinking agent for functionalized rubbers: role of coupling agents Silica filler as a crosslinking agent for functionalized rubbers: role of coupling agents" TECHNICAL PAPERS - AMERICAN CHEMICAL SOCIETY, RUBBER DIVISION, [FALL TECHNICAL PROGRAM], 164TH, CLEVELAND, OH, UNITED STATES, OCT. 14-17, 2003 , 434-464 PUBLISHER: AMERICAN CHEMICAL SOCIETY, RUBBER DIVISION, AKRON, OHIO. CODEN: 69EZYK; ISSN: 1547-196, 2003, XP009056476
- DATABASE CA [Online] CHEMICAL ABSTRACTS SERVICE, COLUMBUS, OHIO, US; LIPINSKA, MAGDALENA ET AL LIPINSKA, MAGDALENA ET AL: "Effect of double modification of the chalk surface on the activity of chalk used as a filler in elastomers Effect of double modification of the chalk surface on the activity of chalk used as a filler in elastomers" XP002352794 retrieved from STN Database accession no. 2003:258922 & PRZEMYSL CHEMICZNY , 82(3), 234-239 CODEN: PRCHAB; ISSN: 0033-2496 PRZEMYSL CHEMICZNY , 82(3), 234-239 CODEN: PRCHAB; ISSN: 0033-2496, 2003,

## Description

### FIELD OF THE INVENTION

The present invention relates to a polymer compound containing at least one, optionally hydrogenated, carboxylated nitrile rubber polymer, at least one organo functional silane compound having at least one epoxy group capable of forming a derivative of a carboxyl group, and at least one filler. The present invention also relates to a process of curing a compound containing at least one, optionally hydrogenated, carboxylated nitrile rubber polymer by admixing at least one organo functional silane compound having at least one epoxy group capable of forming a derivative of a carboxyl group, and at least one filler and subsequently curing the compound.

### BACKGROUND OF THE INVENTION

Carboxylated hydrogenated nitrile rubber (HXNBR), prepared by the selective hydrogenation of carboxylated acrylonitrile-butadiene rubber (nitrile rubber; XNBR, a co-polymer comprising at least one conjugated diene, at least one unsaturated nitrile, at least one carboxylated monomer and optionally further comonomers), is a specialty rubber which has very good heat resistance, excellent ozone and chemical resistance, and excellent oil resistance. Coupled with the high level of mechanical properties of the rubber (in particular the high resistance to abrasion) it is not surprising that XNBR and HXNBR have found widespread use in the automotive (belts, seals, hoses, bearing pads) oil (stators, well head seals, valve plates), electrical (cable sheating), mechanical engineering (wheels, rollers), and shipbuilding (pipe seals, couplings) industries, amongst others.

CA 2,462,006 discloses compounds which do not have silane functionality, and uses epoxy additives having one or more epoxide groups, and at least one crosslinking agent. The present invention has at least one epoxy group and at least one silane functionality, and does not need any additional crosslinking agents.

U.S. Patent No. 6,380, 291 discloses a rubber composition comprising an acrylate or methacrylate metal salt, a peroxide-curable elastomer, a plasticizer having one or more epoxide group which displays a lower compound Mooney viscosity and higher delta torque. No other curatives are needed with the present inventive organo functional silane compound, unlike U.S. Patent No. 6,380,291 which uses an acrylate or methacrylate metal salt with the epoxy additive as a curative.

### SUMMARY OF THE INVENTION

The present invention relates to a polymer compound containing at least one, optionally hydrogenated, carboxylated nitrile polymer, at least one organo functional silane compound having at least one epoxy group capable of forming a derivative of a carboxyl group and at least one filler.

The present invention also relates to a polymer compound containing at least one, optionally hydrogenated, carboxylated nitrile polymer, at least one organo functional silane compound having at least one epoxy group capable of forming a derivative of a carboxyl group, and at least one filler that does not further contain a curative or a cross-linking agent, such as peroxides, sulphur, sulphur compounds, and the like.

The present invention also relates to a process of curing a compound including admixing at least one, optionally hydrogenated, carboxylated nitrile rubber polymer, with at least one organo functional silane compound having at least one epoxy group capable of forming a derivative of a carboxyl group.

### DESCRIPTION OF THE INVENTION

As used throughout this specification, the term "carboxylated nitrile polymer" or XNBR is intended to have a broad meaning and is meant to encompass an elastomer having repeating units derived from at least one conjugated diene, at least one alpha-beta-unsaturated nitrile, at least one monomer having a carboxylic group and optionally further one or more copolymerizable monomers.

The conjugated diene may be any known conjugated diene, preferably a C₄-C₆ conjugated diene. Preferred conjugated dienes are butadiene, isoprene, piperylene, 2,3-dimethyl butadiene and mixtures thereof. Even more preferred C₄-C₆ conjugated dienes are butadiene, isoprene and mixtures thereof. The most preferred C₄-C₆ conjugated diene is butadiene.

The alpha-beta-unsaturated nitrile may be any known alpha-beta-unsaturated nitrile, preferably a C₃-C₅ alpha-beta-unsaturated nitrile. Preferred C₃-C₅ alpha-beta-unsaturated nitriles are acrylonitrile, methacrylonitrile, ethacrylonitrile and mixtures thereof. The most preferred C₃-C₅ alpha-beta-unsaturated nitrile is acrylonitrile.

The monomer having at least one carb-oxylic group may be any known monomer having at least one carboxylic group being copolymerizable with the nitrile and the diene.

Preferred monomers having at least one carboxylic group are unsaturated carboxylic acids. Non-limiting examples of suitable unsaturated carboxylic acids are fumaric acid, maleic acid, acrylic acid, methacrylic acid and mixtures thereof.

Preferably, the copolymer contains in the range of from 40 to 85 weight percent of repeating units derived from one or more conjugated dienes, in the range of from 15 to 60 weight percent of repeating units derived from one or more unsaturated nitriles and in the range of from 0.1 to 15 weight percent of repeating units derived from one or more monomers having at least one carboxylic group. More preferably, the copolymer contains in the range of from 55 to 75 weight percent of repeating units derived from one or more conjugated dienes, in the range of from 25 to 40 weight percent of repeating units derived from one or more unsaturated nitriles and in the range of from 1 to 7 weight percent of repeating units derived from one or more monomers having at least one carboxylic group.

Optionally, the copolymer may further contain repeating units derived from one or more copolymerizable monomers, such as alkylacrylate or styrene. Repeating units derived from one or more copolymerizable monomers will replace either the nitrile or the diene portion of the nitrile rubber and it will be apparent to the skilled in the art that the above mentioned figures will have to be adjusted to result in 100 weight percent.

Hydrogenated in this invention is preferably understood by more than 50 % of the residual double bonds (RDB) present in the starting nitrile polymer/NBR being hydrogenated, preferably more than 90 % of the RDB are hydrogenated, more preferably more than 95 % of the RDB are hydrogenated and most preferably more than 99 % of the RDB are hydrogenated.

The present invention is not restricted to a special process for preparing the hydrogenated carboxylated NBR. However, the HXNBR preferred in this invention is readily available as disclosed in WO-01/77185-A1.

The XNBR as well as the HXNBR which forms a preferred component of the polymer compound of the invention can be
characterized by standard techniques known in the art. For example, the molecular weight distribution of the polymer was determined by gel permeation chromatography (GPC) using a Waters 2690 Separation Module and a Waters 410 Differential Refractometer running Waters Millennium software version 3.05.01. Samples were dissolved in tetrahydrofuran (THF) stabilized with 0.025% BHT. The columns used for the determination were three sequential mixed-B gel columns from Polymer Labs. Reference Standards used were polystyrene standards from American Polymer Standards Corp.

The present inventive polymer compound further contains at least one organo functional silane compound having at least one epoxy group capable of forming a derivative of a carboxyl group. According to the present invention the organo functional silane, preferably has a general formula Xₐ-R'-[Si-(OR") b]_{c} wherein X is an epoxy group capable of forming a derivative of a carboxyl group and a is greater than or equal to 1; R' is an alkylene group; OR" is an alkoxy or acyloxy group; b is 1, 2, or 3; and c is greater than or equal to 1. This additive acts as a curable (reactive) plasticizer which cures the carboxylated nitrile polymer (as seen in MDR), increases its modulus, and improves the processibility by lowering the Mooney viscosity. Moreover, it is the only curative used with no need for other traditional curatives such as sulphur or peroxide.

Another aspect of the polymer compound of the present invention is that it will have improved sealing performance as minimal plasticizer is needed in the compound. Further, compounds according to the present invention will improve incorporation and dispersion of mineral fillers and glass fillers and will adhere better to a substrate, such as glass or metal.

According to the present invention, the organo functional silane compound is added in an amount from about 1 to 20 parts per hundred rubber and more preferably from about 5 to 10 parts per hundred rubber.

The inventive polymer compound further contains at least one filler. The filler may be an active or an inactive filler or a mixture thereof. The filler may be in particular:
- highly dispersed silicas, prepared e.g. by the precipitation of silicate solutions or the flame hydrolysis of silicon halides, with specific surface areas of in the range of from 5 to 1000 m²/g, and with primary particle sizes of in the range of from 10 to 400 nm; the silicas can optionally also be present as mixed oxides with other metal oxides such as those of Al, Mg, Ca, Ba, Zn, Zr and Ti;
- synthetic silicates, such as aluminum silicate and alkaline earth metal silicate like magnesium silicate or calcium silicate, with BET specific surface areas in the range of from 20 to 400 m²/g and primary particle diameters in the range of from 10 to 400 nm;
- natural silicates, such as kaolin and other naturally occurring silica;
- glass fibers and glass fiber products (matting, extrudates) or glass microspheres;
- carbon blacks; the carbon blacks to be used here are prepared by the lamp black, furnace black or gas black process and have preferably BET (DIN 66 131) specific surface areas in the range of from 20 to 200 m²/g, e.g. SAF, ISAF, HAF, FEF or GPF carbon blacks;
- rubber gels, especially those based on polybutadiene, butadiene/styrene copolymers, butadiene/acrylonitrile copolymers and polychloroprene;
or mixtures thereof.

Examples of preferred mineral fillers include silica, silicates, clay such as bentonite, gypsum, alumina, titanium dioxide, talc, mixtures of these, and the like. These mineral particles have hydroxyl groups on their surface, rendering them hydrophilic and oleophobic. This exacerbates the difficulty of achieving good interaction between the filler particles and the rubber. For many purposes, the preferred mineral is silica, especially silica made by carbon dioxide precipitation of sodium silicate. Dried amorphous silica particles suitable for use in accordance with the invention may have a mean agglomerate particle size in the range of from 1 to 100 microns, preferably between 10 and 50 microns and most preferably between 10 and 25 microns. It is preferred that less than 10 percent by volume of the agglomerate particles are below 5 microns or over 50 microns in size. A suitable amorphous dried silica moreover usually has a BET surface area, measured in accordance with DIN (Deutsche Industrie Norm) 66131, of in the range of from 50 and 450 square meters per gram and a DBP absorption, as measured in accordance with DIN 53601, of in the range of from 150 and 400 grams per 100 grams of silica, and a drying loss, as measured according to DIN ISO 787/11, of in the range of from 0 to 10 percent by weight. Suitable silica fillers are available under the trademarks HiSil®210, HiSil® 233 and HiSil®243 from PPG Industries Inc. Also suitable are Vulkasil® S and Vulkasil® N, from Lanxess Deutschland GmbH.

Often, use of carbon black as a filler is advantageous. Usually, carbon black is present in the polymer composite in an amount of in the range of from 20 to 200 parts by weight, preferably 30 to 150 parts by weight, more preferably 40 to 100 parts by weight. Further, it might be advantageous to use a combination of carbon black and mineral filler in the inventive polymer composite. In this combination the ratio of mineral fillers to carbon black is usually in the range of from 0.05 to 20, preferably 0.1 to 10.

The rubber composition according to the present invention can contain further auxiliary products for rubbers, such as reaction accelerators, vulcanizing accelerators, vulcanizing acceleration auxiliaries, antioxidants, foaming agents, anti-aging agents, heat stabilizers, light stabilizers, ozone stabilizers, processing aids, plasticizers, tackifiers, blowing agents, dyestuffs, pigments, waxes, extenders, organic acids, inhibitors, metal oxides, and activators such as triethanolamine, polyethylene glycol, hexanetriol, etc., which are known to the rubber industry. The rubber aids are used in conventional amounts, which depend inter alia on the intended use. Conventional amounts are e.g. from 0.1 to 50 wt.%, based on rubber. Preferably the composition comprises in the range of 0.1 to 20 phr of an organic fatty acid as an auxiliary product, preferably a unsaturated fatty acid having one, two or more carbon double bonds in the molecule which more preferably includes 10% by weight or more of a conjugated diene_acid having at least one conjugated carbon-carbon double bond in its molecule. Preferably those fatty acids have in the range of from 8-22 carbon atoms, more preferably 12-18. Examples include stearic acid, palmitic acid and oleic acid and their calcium-, zinc-, magnesium-, potassium- and ammonium salts. Preferably the composition comprises in the range of 5 to 50 phr of an acrylate as an auxiliary product. Suitable acrylates are known from EP-A1-0 319 320, in particular p. 3, 1. 16 to 35, from US-5 208 294, in particular Col. 2, I. 25 to 40, and from US-4 983 678, in particular Col. 2, I. 45 to 62. Particular reference is made to zinc acrylate, zinc diacrylate or zinc dimethacrylate or a liquid acrylate, such as trimethylol-propanetrimethacrylate (TRIM), butanedioldimethacrylate (BDMA) and ethylenglycoldimethacrylate (EDMA). It might be advantageous to use a combination of different acrylates and/or metal salts thereof. Of particular advantage is often to use metal acrylates in combination with a Scorch-retarder such as sterically hindered phenols (e.g., methyl-substituted aminoalkylphenols, in particular 2,6-di-tert.-butyl-4-dimethylaminomethylphenol).

The ingredients of the final polymer composite are mixed together, suitably at an elevated temperature that may range from 25° C to 200° C. Normally the mixing time does not exceed one hour and a time in the range from 2 to 30 minutes is usually adequate. The mixing is suitably carried out in an internal mixer such as a Banbury mixer, or a Haake or Brabender miniature internal mixer. A two-roll mill mixer also provides a good dispersion of the additives within the elastomer. An extruder also provides good mixing, and permits shorter mixing times. It is possible to carry out the mixing in two or more stages, and the mixing can be done in different apparatus, for example one stage in an internal mixer and one stage in an extruder. For compounding and vulcanization see also: Encyclopedia of Polymer Science and Engineering, Vol. 4, p. 66 et seq. (Compounding) and Vol. 17, p. 666 et seq. (Vulcanization).

According to the present invention, the inventive polymer compound may be used in the manufacture of a shaped article. Preferred shaped articles include a timing belt, seal, hose, bearing pad, stator, well head seal, valve plate, cable sheeting, wheel roller, pipe seal, in place gaskets or footwear component prepared by injection molding technology. Furthermore, the inventive polymer compound is very well suited for wire and cable production.

The invention is further illustrated but is not intended to be limited by the following examples in which all parts and percentages are by weight unless otherwise specified.

### EXAMPLES

### Examples 1 - 3

Polymer compounds were mixed in a brabender miniature internal mixer in a single mixing step (8min/30°C/80 rpm). Compounds can also be prepared by mill mixing. The formulations used in this assessment are based on a recipe according to Table 1. Example 3 is comparative.

**Table 1. Compounding Recipe.**

| | Example 1 | Example 2 | Comp. 3 |
|---|---|---|---|
| ARMEEN 18D | 0.5 | 0.5 | 0.5 |
| THERBAN XT 8889 | 100 | 100 | 100 |
| CARBON BLACK, N 660 STERLING-V | 50 | 50 | 50 |
| NAUGARD-445 | 1 | 1 | 1 |
| PLASTHALL TOTM | 5 | 5 | 5 |
| DIAK #7 | -- | -- | 1.5 |
| DOW CORNING Z-6040 | 5 | 10 | -- |
| STRUKTOL ZP 1014 | -- | -- | 7 |
| VULCUP 40KE | -- | -- | 7 |

| | | | |
|---|---|---|---|
| Armeen® 18D is an octadecylamine available from AkzoNobel and is used to reduce compound stickiness to metal. | | | |
| THERBAN® XT™ 8889 is HXNBR from Lanxess Deutschland GmbH. Naugard™ 445 (p-dicumyl diphenyl amine) is a stabilizer from Uniroyal. | | | |
| Plasthall® TOTM (Trioctyl Trimellitate) is a plasticizer from C.P. Hall. Diak 7 (Triallyl isocyanurate) is a coagent from DuPont. | | | |
| Struktol® ZP 1014 (zinc peroxide 50% on inert carrier). Vulcup 40 KE (α, α-bis(t-butylperoxy)diisopropylbenzene), 40% peroxide. The organofunctional silane compound used as a curable plasticizer agent is Dow CorningZ-6040® (3-glycidoxypropyltrimethoxysilane) a liquid additive and is available from the Dow Corning Corporation. | | | |

### Polymer Compound Properties

Table 2 illustrates a summary of the properties of polymer compounds according to Examples 1-3 . MDR Cure Properties (ASTM D5289, *180°C, 1° arc, 1.7 Hz, 60 minutes),* Mooney (ASTM D1646), and Stress-Strain (ASTM D412).

**Table 2. Polymer Composite properties.**

| | Example 1 | Example 2 | Comp. 3 |
|---|---|---|---|
| MDR Cure Properties | | | |
| Maximum Torque (MH, Dn.m) | 21.14 | 36.83 | 41.46 |
| Minimum Torque (ML, Dn.m) | 1.59 | 1.45 | 1.80 |
| Delta MH-ML (Dn.m) | 19.55 | 35.38 | 39.66 |
| t 90 (min) | 36.5 | 40.7 | 12.4 |
| Mooney | 82 | 70 | 78 |
| ML (1 + 4) @ 100°C | | | |
| Stress-Strain | | | |
| Hardness (Shore A) | 62 | 69 | 71 |
| Elongation @ Break (%) | 475 | 194 | 195 |
| Ultimate Tensile (MPa) | 13.4 | 14.0 | 26.2 |
| Modulus @ 100% (MPa) | 3.0 | 6.9 | 12.5 |

The Delta MH-ML gives an indication of the crosslinking density. In the absence of any conventional curatives, examples 1 and 2 showed a delta torque of 19.5 to 35.5. The delta torque increases as a function of DOW CORNING Z-6040™ content as well as the Modulus at 100%. A 10 phr of DOW CORNING Z-6040™ gives a cure density close to 7 phr of Vulcup 40KE (peroxide). Moreover, the Mooney viscosity decreases as a function of glycidoxy functional silane compound content. The increasing delta torque and decreasing Mooney viscosity is evidence that this additive is behaving as a curative for HXNBR as well as a plasticizer.

## Claims

1. A curable polymer compound comprising at least one, optionally hydrogenated carboxylated nitrile polymer, at least one organo functional silane compound having at least one epoxy group and at least one filler.

2. The curable polymer compound according to Claim 1, wherein the silane compound is of the formula Xₐ-R'-[Si-(OR") _{b}] _{c}
wherein X is an epoxy group,
a is a numeral greater than or equal to 1,
R' is an alkylene group,
OR" is an alkoxy or acyloxy group,
b is a numeral selected from 1, 2, or 3, and
c is a numeral greater than or equal to 1.

3. The curable polymer compound according to Claim 1, wherein the carboxylated nitrile polymer is a hydrogenated carboxylated nitrile rubber.

4. The curable polymer compound according to Claim 1, wherein the compound does not comprise any further cross-linking or curing agent.

5. The curable polymer compound according to Claim 4, wherein the compound does not comprise a curative selected from an acrylate or a methacrylate metal salt having an epoxy additive.

6. The curable polymer compound according to any of Claim 1, wherein the organo functional silane compound is 3-glycidoxypropyltrimethoxysilane.

7. The curable polymer compound according to Claim 1, wherein the functional silane compound is present in an amount of from 1 to 20 phr.

8. The curable polymer compound according to Claim 7, wherein the functional silane compound is present in an amount of from 5 to 10 phr.

9. A process of curing a polymer compound comprising admixing at least one, optionally hydrogenated, carboxylated nitrile rubber polymer with at least one organo functional silane compound having at least one epoxy group and at least one filler.

10. A shaped article comprising a cured polymer compound according to Claim 9.

11. A shaped article according to Claim 10 in the form of a of a seal, hose, bearing pad, stator, well head seal, valve plate, cable sheeting, wheel roller, pipe seal, belt, in place gaskets or footwear component prepared by injection molding technology, wire and cable production.

12. A shaped article according to Claim 11, wherein the shaped article is a timing or conveyor belt.

## Patentansprüche

1. Härtbares Polymercompound, enthaltend mindestens ein gegebenenfalls hydriertes carboxyliertes Nitrilpolymer, mindestens eine organofunktionelle Silanverbindung mit mindestens einer Epoxidgruppe und mindestens einen Füllstoff.

2. Härtbares Polymercompound nach Anspruch 1, worin die Silanverbindung die Formel Xₐ-R'-[Si-(OR")_{b}]_{c} hat,
worin X für eine Epoxidgruppe steht,
a für eine Zahl größer gleich 1 steht,
R' für eine Alkylengruppe steht,
OR" für eine Alkoxy- oder Acyloxygruppe steht,
b für eine unter 1, 2 oder 3 ausgewählte Zahl steht und
c für eine Zahl größer gleich 1 steht.

3. Härtbares Polymercompound nach Anspruch 1, worin es sich bei dem carboxylierten Nitrilpolymer um einen hydrierten carboxylierten Nitrilkautschuk handelt.

4. Härtbares Polymercompound nach Anspruch 1, worin das Compound keinen weiteren Vernetzer oder Härter enthält.

5. Härtbares Polymercompound nach Anspruch 4, worin das Compound keinen unter einem Acrylat- oder Methacrylat-Metallsalz mit einem Epoxid-Additiv ausgewählten Härter enthält.

6. Härtbares Polymercompound nach Anspruch 1, worin es sich bei der organofunktionellen Silanverbindung um 3-Glycidoxypropyltrimethoxysilan handelt.

7. Härtbares Polymercompound nach Anspruch 1, worin die funktionelle Silanverbindung in einer Menge von 1 bis 20 phr vorliegt.

8. Härtbares Polymercompound nach Anspruch 7, worin die funktionelle Silanverbindung in einer Menge von 5 bis 10 phr vorliegt.

9. Verfahren zur Härtung eines Polymercompounds, bei dem man mindestens ein gegebenenfalls hydriertes carboxyliertes Nitrilkautschukpolymer mit mindestens einer organofunktionellen Silanverbindung mit mindestens einer Epoxidgruppe und mindestens einem Füllstoff vermischt.

10. Formkörper, umfassend ein gehärtetes Polymercompound gemäß Anspruch 9.

11. Formkörper nach Anspruch 10 in Form einer Dichtung, eines Schlauchs, eines Lagerelements, eines Stators, einer Bohrkopfdichtung, einer Ventilplatte, eines Kabelmantels, eines Rads, einer Walze, einer Röhrdichtung, eines Riemens, einer In-Place-Gasket-Dichtung oder einer Schuhwerkkomponente, hergestellt durch Spritzgußtechnologie, Draht- oder Kabelproduktion.

12. Formkörper nach Anspruch 11, bei dem es sich um einen Zahnriemen oder ein Förderband handelt.

## Revendications

1. Composé polymère durcissable comprenant au moins un polymère de nitrile carboxylé, éventuellement hydrogéné, au moins un composé silane organofonctionnel comportant au moins un groupe époxy et au moins une charge.

2. Composé polymère durcissable selon la revendication 1, dans lequel le composé silane a pour formule -Xₐ-R'-[Si-(OR")_{b}]_{c}
dans laquelle X représente un groupe époxy,
a représente un nombre supérieur ou égal à 1,
R' représente un groupe alkylène,
OR" représente un groupe alcoxy ou acyloxy,
b représente un nombre choisi parmi 1, 2 ou 3, et
c représente un nombre supérieur ou égal à 1.

3. Composé polymère durcissable selon la revendication 1, dans lequel le polymère de nitrile carboxylé est un caoutchouc nitrile carboxylé hydrogéné.

4. Composé polymère durcissable selon la revendication 1, lequel composé ne comprend pas d'autre agent de réticulation ou de durcissement.

5. Composé polymère durcissable selon la revendication 4, lequel composé ne comprend pas de durcisseur choisi parmi un sel métallique d'acrylate ou de méthacrylate comportant un additif époxy.

6. Composé polymère durcissable selon la revendication 1, dans lequel le composé silane organofonctionnel est le 3-glycidoxypropyltriméthoxysilane.

7. Composé polymère durcissable selon la revendication 1, dans lequel le composé silane fonctionnel est présent dans une proportion de 1 à 20 phr.

8. Composé polymère durcissable selon la revendication 7, dans lequel le composé silane fonctionnel est présent dans une proportion de 5 à 10 phr.

9. Procédé de durcissement d'un composé polymère comprenant le fait de mélanger au moins un polymère de caoutchouc nitrile carboxylé, éventuellement hydrogéné, avec au moins un composé silane organofonctionnel comportant au moins un groupe époxy et au moins une charge.

10. Article profilé comprenant un composé polymère durci selon la revendication 9.

11. Article profilé selon la revendication 10 sous forme de joint, de tuyau flexible, de patin, de stator, de joint de tête de puits, de plaque porte-clapet, de garniture de câble, de poulie, de joint de tuyau, de courroie, de joints d'étanchéité en place ou de constituant pour chaussures préparé par une technologie de moulage par injection, production de fils et de câbles.

12. Article profilé selon la revendication 11, dans lequel l'article profilé est une courroie de distribution ou une bande transporteuse.
